# EUROPÄISCHE PATENTSCHRIFT

(11) **EP 1 595 747 B1**
(45) Veröffentlichungstag und Bekanntmachung des Hinweises auf die Patenterteilung: **09.05.2007**
(21) Anmeldenummer: 05010359.7
(22) Anmeldetag: 12.05.2005
(51) Int. Cl.: B60R 13/02

(54) **Mittelkonsole mit Basisteil aus zweiteiligem Innenteil und wenigstens einem Seitenelement**
Midconsole with a base portion and at least a side element
Console centrale constituée d'une partie de base et d'au moins un élément latéral

(30) Priorität: 12.05.2004 DE 202004007597 U
(43) Veröffentlichungstag der Anmeldung: 16.11.2005
(73) Patentinhaber: Röchling Automotive AG & Co. KG, 68165 Mannheim (DE)
(72) Erfinder: Maierholzner, Thomas, 84137 Vilsbiburg (DE)
(74) Vertreter: Trossin, Hans-Jürgen

(56) Entgegenhaltungen:
- DE-A1- 19 826 943
- GB-A- 2 124 981
- PATENT ABSTRACTS OF JAPAN Bd. 016, Nr. 353 (M-1288), 30. Juli 1992 (1992-07-30) & JP 04 110247 A (TOYODA GOSEI CO LTD), 10. April 1992 (1992-04-10)
- PATENT ABSTRACTS OF JAPAN Bd. 2000, Nr. 13, 5. Februar 2001 (2001-02-05) & JP 2000 272330 A (INOAC CORP), 3. Oktober 2000 (2000-10-03)
- PATENT ABSTRACTS OF JAPAN Bd. 2000, Nr. 10, 17. November 2000 (2000-11-17) & JP 2000 203345 A (KOJIMA PRESS CO LTD; TOYOTA MOTOR CORP), 25. Juli 2000 (2000-07-25)

## Beschreibung

Die vorliegende Erfindung betrifft eine Mittelkonsole für ein Kraftfahrzeug, welche ein in Mittelkonsolenlängsrichtung verlaufendes Innenteil und wenigstens ein Seitenelement umfasst, das zur Bildung eines Mittelkonsolenbasisteils am Innenteil angebracht oder anbringbar ist und das im am Innenteil angebrachten Zustand im Wesentlichen in Mittelkonsolenlängsrichtung verläuft. Weiterhin betrifft die vorliegende Erfindung ein Verfahren zur Herstellung einer solchen Mittelkonsole.

Eine Mittelkonsole der eingangs genannten Art ist aus der DE 198 26 943 A1 bekannt. Die bekannte Mittelkonsole ist aus einer inneren Stützstruktur und daran durch Vibrationsschweißen angebrachte Seitenelemente gebildet. Stützstruktur und Seitenwandelemente bilden gemeinsam eine sowohl in Fahrzeuglängsrichtung als auch in Fahrzeugquerrichtung deformationssteife Struktur, welche Kräfte übertragen kann und im Falle einer Deformation ein nennenswertes Energieaufnahmevermögen aufweist.

Zusätzlich weist die bekannte Mittelkonsole an der Stützstruktrur in Fahrzeuglängsrichtung verlaufende Rippen auf, welche gemeinsam mit Längswänden der Stützstruktur sowie den an dieser angebrachten Seitenwandelementen zum einen ein stabiles Basisteil und zum anderen Luftführungskanäle bildet.

Die Stützstruktur als Innenteil der bekannten Mittelkonsole umfasst Längswände, mehrere Bodenelemente, mehrere in Mittelkonsolenquerrichtung verlaufende Querträger sowie mehrere ebenfalls in Mittelkonsolenquerrichtung verlaufende Querwände. Darüber hinaus sind, wie oben gesagt, an den Längswänden in Mittelkonsolenlängs- und Querrichtung verlaufende Rippen vorgesehen. Diese Teilelemente können entweder zu einer Einheit verbunden oder einstückig ausgeführt sein.

Nachteilig an der bekannten Mittelkonsole ist dabei zum einen, dass das aus zu einer Einheit verbundenen Teilelementen gebildete Innenteil einen hohen Montage- und Fügeaufwand erfordert, was wiederum zu hohen Kosten und zu einer großen Anzahl potentieller Montagefehlerquellen führt.

Die genannte einstückige Ausbildung des Innenteils erfordert zum anderen ein großes und geometrisch komplexes Spritzgußwerkzeug mit mehreren Schiebern, um die gewünschten Körperstrukturen zu erzeugen und gleichzeitig die Entformbarkeit des Innenteils aus der Spritzgußform gewährleisten zu können. Das einstückig geformte Innenteil mit seinem U-förmigen Hauptquerschnitt muss nämlich zwangsläufig in senkrechter Richtung entformt werden.

Bereits die Entformung des geometrisch komplexen einstückigen Innenteils des Standes der Technik aus einer Spritzgussform ist häufig nur unter erheblicher Kraftausübung möglich. Hieraus können sich Risiken einer unerwünschten Verformung des Bauteils bei der Entformung ergeben.

Darüber hinaus kann das einstückig ausgeformte Innenteil nicht beliebig mit Verrippungen und Montageausbildungen ausgeformt werden, da mit zunehmender geometrischer Komplexität des einstückig geformten Innenteils dessen Entformbarkeit erschwert wird. Zudem besteht bei sehr hohen Verrippungen das Risiko von Einfallstellen auf der Sichtseite.

Hinzu kommt schließlich, dass bei derart großen Spritzgussteilen eine große Menge Kunststoffs schnell in die Formkavität eingebracht und dort möglichst gleichmäßig abgekühlt werden muss. Dies ist nicht immer ohne Weiteres möglich, so dass aufgrund fehlender Ausfüllung der Formkavität oder/und aufgrund unterschiedlicher Spritzgussmaterial-Abkühlungsgeschwindigkeiten Ausschuss in Form von unfertigen Innenteilen oder/und von Innenteilen mit fehlerhaften Oberflächen oder mit über das Innenteil schwankenden Wandstärken erzeugt wird.

Es ist aufgrund des oben Gesagten die Aufgabe der vorliegenden Erfindung, eine technische Lehre anzugeben, welche es gestattet, Mittelkonsolen für Kraftfahrzeuge mit ausreichender Stabilität technisch einfacher und bei niedrigen Kosten herzustellen.

Die vorliegende Aufgabe wird gemäß einem ersten Gesichtspunkt der vorliegenden Erfindung gelöst durch eine Mittelkonsole der eingangs genannten Art, bei welcher das Innenteil zwei miteinander im Wesentlichen in Mittelkonsolenlängsrichtung längs einer Verbindungsfläche verbundene Innenteilelemente umfasst, wobei die Verbindungsfläche im Wesentlichen in Mittelkonsolenlängsrichtung verläuft.

Bei der erfindungsgemäßen Ausbildung des Innenteils sind zwar zwei Innenteilelemente zu erzeugen, welche miteinander zu verbinden sind, was zunächst, verglichen mit einem einstückig spritzgegossenem Innenteil ein zusätzliches Spritzgusswerkzeug sowie einen zusätzlichen Montageschritt erfordert. Jedoch werden diese zusätzlichen Maßnahmen durch die erzielten Vorteile überkompensiert.

Dadurch, dass die Verbindungsfläche - das ist eine imaginäre Fläche, welche die Trennfugen zwischen den miteinander verbundenen Innenteilelementen enthält - im Wesentlichen in Mittelkonsolenlängsrichtung verläuft, kann die geometrische Komplexität der Innenteilelemente verglichen mit der Komplexität eines identisch ausgeformten einstückigen Innenteils erheblich reduziert werden. In jedem der Innenteilelemente treten, verglichen mit einem einstückig herzustellenden Innenteil, wesentlich weniger Hinterschnitte auf, was zum einen die Entformung eines jeden Innenteilelements erleichtert, und was zum anderen gestattet, Verstärkungsrippen genau dort anzubringen, wo sie gebraucht werden, ohne die Entformbarkeit des Innenteilelements wesentlich zu beeinträchtigen. Weiterhin können die Innenteilelemente als im Wesentlichen längs einer Ebene verlaufende, verhältnismäßig flache Bauteile mit geringer Bauhöhe gestaltet werden, die einfach herzustellen sind. Dadurch wird es möglich, die beiden Einzelteile des Innenteils jeweils in Querrichtung entformen zu können. Die dafür notwendigen Spritzgußwerkzeuge können dadurch erheblich flacher ausgeführt werden und benötigen zur Entformung von in ° Längsrichtung oder in senkrechter Richtung verlaufenden Rippen keinerlei Schieber.

Weiterhin wird für jedes Innenteilelement weniger Spritzgussmaterial benötigt als zur Herstellung eines einstückigen Innenteils erforderlich ist. Ebenso ist das Volumen der Formkavität zur Herstellung eines Innenteilelements kleiner als das einer Formkavität für ein einstückiges Innenteil. Daraus folgt, dass beim Spritzgießen der Innenteilelemente füllungsbedingte Fehler weniger häufig auftreten und auch eine gleichmäßige Abkühlung der Innenteilelemente in ihren Spritzgussformen leichter erreichbar ist. In der Folge ist die Ausschussquote deutlich verringert.

Verglichen mit dem aus einer Vielzahl miteinander zu einem Innenteil verbundenen Bauteilen ist bei dem erfindungsgemäßen Innenteil der Montageaufwand erheblich verringert, wobei die Innenteilsteifigkeit aufgrund der geringen Anzahl voneinander unabhängiger Montagestellen erhöht ist.

Die Verbindung der beiden Innenteilelemente miteinander kann in beliebiger, an sich bekannter Weise erreicht werden, aus Festigkeitsgründen vorzugsweise durch Schweißen, aber auch durch Kleben, Verklipsen, Verschrauben und dergleichen. Wenn oben gesagt ist, dass die Verbindungsfläche durch die Trennfugen zwischen den miteinander verbundenen Innenteilelementen definiert ist, so tritt im Falle von miteinander verschweißten Innenteilelementen die Schweißnaht an die Stelle der nicht mehr vorhandenen Trennfuge.

Zwar wird, verglichen mit der einstückigen Herstellung des Innenteils des Standes der Technik, ein zusätzliches Spritzgusswerkzeug benötigt. Im Vergleich dazu sind die zur Erzeugung der Innenteilelemente notwendigen Spritzgussformen aufgrund der Entformung in Querrichtung jedoch erheblich einfacher aufgebaut und benötigen für Verrippungen in Längsrichtung oder in senkrechter Richtung keine Schieber, so dass insgesamt weniger Aufwand an Werkzeugkosten entsteht. Zudem kann mit diesem Konzept eine insgesamt steifere Mittelkonsole mit wesentlich geringeren Ausschussraten erzeugt werden.

Bevorzugt werden die beiden Innenteilelemente miteinander verschweißt um eine Mikro-Relativbewegung der beiden Innenteilelemente zueinander in der Trennfuge zu vermeiden. Derartige Mikro-Relativbewegungen können bei den im Fahrzeug üblicherweise auftretenden Verformungen, insbesondere Verwindungen, der Mittelkonsole zu einer unerwünschten Geräuscherzeugung führen. Auch ein Verkleben der Innenteile miteinander zur Vermeidung von Knarzgeräuschen ist möglich.

Mit besonders geringer Teilanzahl kommt man vorteilhaft dann aus, wenn das Innenteil aus den zwei Innenteilelementen besteht. Dann reicht es nämlich aus, die zwei Innenteilelemente längs der Verbindungsfläche zu einem Innenteil zu vereinigen und das wenigstens eine Seitenelement mit dem Innenteil zu einem Mittelkonsolenbasisteil zu verbinden. Auch der Montageaufwand ist bei dieser Ausgestaltung sehr gering.

Grundsätzlich kann daran gedacht sein, die beiden Innenteilelemente beliebig auszugestalten. Jedoch ist es aus fertigungstechnischer Hinsicht vorteilhaft, wenn jedes Innenteilelement eines Innenteils im Wesentlichen die gleiche Masse aufweist. Insofern ist nämlich zu erwarten, dass die Prozessparameter bei der Herstellung beider Innenteilelemente ähnlich und aufeinander übertragbar sind, so dass neue Spritzgusswerkzeuge für beide Innenteilelemente schnell zur Einsatzreife in der Serienfertigung gebracht werden können.

Bevorzugt unterscheiden sich die Massen der beiden Innenteilelemente um nicht mehr als 20 %, besonders bevorzugt um nicht mehr als 10 %.

Zusätzlich oder alternativ ist es vorteilhaft, wenn die beiden Innenteilelemente ähnliche Geometrien aufweisen, etwa wenn sie zumindest Abschnittsweise spiegelsymmetrisch sind. Bevorzugt ist etwa 60 % der Gestalt der Innenteilelemente spiegelbildlich ausgebildet, besonders bevorzugt 80 % der Gestalt. Auch dies führt zu einer Vereinheitlichung oder Annäherung der Herstellprozesse der beiden Innenteilelemente und dient damit einer möglichst schnellen Serieneinsatzreife der zur Herstellung der Innenteilelemente notwendigen Spritzgusswerkzeuge.

Möglichst ähnliche Innenteilelemente eines Innenteils im Sinne der obigen Ausführungen können dadurch erhalten werden, dass die Verbindungsfläche zumindest abschnittsweise im Wesentlichen orthogonal zur Mittelkonsolenquerrichtung verläuft, da eine Mittelkonsole in der Regel im fertig montierten Zustand eine zur Mittelkonsolenquerrichtung orthogonale Symmetrieebene besitzt. Zwar wird die Verbindungsfläche häufig auch in Mittelkonsolenquerrichtung verlaufende Flächenanteile aufweisen, da die Trennfuge bei derart komplexen Bauteilen selten in einer Ebene liegt, jedoch ist es von Vorteil, wenn der größte Flächenanteil der Verbindungsfläche orthogonal zur Mittelkonsolenquerrichtung verläuft.

Idealerweise sind die beiden Innenteilelemente identisch, so dass zu ihrer Herstellung nur ein einziges Spritzgusswerkzeug benötigt wird. Dies bietet den größten wirtschaftlichen Nutzen.

Wie oben geschildert wurde, können die Innenteilelemente aufgrund der wesentlich besseren Gestaltungsfreiheit mit geringeren Einschränkungen als ein einstückig hergestelltes Innenteil nach Steifigkeitsgesichtspunkten ausgestaltet sein. Zudem können die zwei Innenteilelemente und das wenigstens eine Seitenelement derart ausgebildet sein, dass sie dann, wenn sie miteinander zu einem Basisteil verbunden sind, wenigstens einen in dem Basisteil verlaufenden Hohlraum definieren. Dieser Hohlraum kann einen Kabelbaum aufnehmen oder kann als Luftkanal zur Zuführung von frischer oder/und klimatisierter Luft in einen Fahrzeuginnenraum dienen. Der Hohlraum kann zumindest abschnittsweise durch Verstärkungsrippen der Innenteilelemente begrenzt sein, so dass mit einem sehr einfach erhaltenen Funktionskanal im Innenteil zusätzlich die Steifigkeit des Innenteils erhöht wird.

Da im Bereich des Innenteils in der Regel Bedienungselemente, wie etwa ein Ganghebel oder ein Automatikwahlhebel vorgesehen sind, ist es aus Sicht einer möglichst einfachen Montage noch vorteilhafter, wenn wenigstens ein Innenteilelement und ein Seitenelement derart ausgebildet sind, dass bei an dem Innenteilelement angebrachtem Seitenelement der wenigstens eine Hohlraum, insbesondere als Luftkanal oder/und als Kabelkanal, zwischen dem Innenteilelement und dem Seitenelement definiert ist.

Ein solcher Funktionshohlraum verläuft üblicherweise zumindest abschnittsweise in Mittelkonsolenlängsrichtung. Die Mittelkonsolenlängsrichtung fällt bei im Fahrzeug montierter Mittelkonsole im Wesentlichen mit der Fahrzeuglängsrichtung zusammen, oder kann abhängig von der Ausgestaltung der Mittelkonsole um die Fahrzeugquerrichtung bezüglich der Fahrzeuglängsrichtung geneigt sein. Die Mittelkonsolenlängsrichtung soll die Richtung der längsten Raumausdehnung der Mittelkonsole bezeichnen. Ebenso fällt die Mittelkonsolenquerrichtung bei im Fahrzeug montiertem Zustand der Mittelkonsole mit der Fahrzeugquerrichtung zusammen.

Der oben angesprochene Hohlraum zwischen einem Innenteilelement und einem diesem zugeordneten weiteren Element: Innenteilelement oder Seitenelement, kann in einfacher Weise dadurch gebildet sein, dass an wenigstens einem der Elemente: Innenteilelement und Seitenelement, wenigstens eine orthogonal zur Mittelkonsolenlängsrichtung vorstehende Rippe ausgeformt ist, welche den Hohlraum zumindest abschnittsweise begrenzt. Durch die Rippe wird nicht nur der Hohlraum gebildet, sondern gleichzeitig die Steifigkeit des Elements erhöht, an welchem die Rippe ausgeformt ist. Mit "abschnittsweise" ist ein Abschnitt längs der Erstreckungsrichtung des Hohlraums bezeichnet.

Unter dem Gesichtspunkt der Steifigkeiterhöhung des die Rippe tragenden Bauteils ist es vorteilhaft, wenn sowohl an wenigstens einem Innenteilelement als auch an wenigstens einem diesem zur Verbindung zugeordneten weiteren Element: Innenteilelement oder Seitenelement, jeweils wenigstens eine orthogonal zur Mittelkonsolenlängsrichtung vorstehende Rippe ausgeformt ist, welche Rippen sich bei an dem Innenteilelement angebrachtem weiteren Element zu einer gemeinsamen Hohlraumbegrenzungswand ergänzen. In diesem Falle wird sowohl die Steifigkeit des Innenteilelements als auch die des weiteren Elements jeweils für sich genommen erhöht. Dies ist insbesondere bei einer Kombination von Innenteilelement und einem Seitenelement als dem weiteren Element von Vorteil, da hierdurch das Seitenelement versteift wird und in größerem Maße tragende Funktion übernehmen kann.

Außerdem können bei der zuletzt genannten Ausführungsform die miteinander zu verbindenden Bauteile bauteilschonend verschweißt werden, da ein Wärmeeintrag lediglich an den freien Schmalseiten der jeweiligen Rippen stattfindet, so dass beim Schweißvorgang Wärme lokal in einen eng begrenzten Raum ohne nennenswerte Beeinflussung von Sichtflächen der Bauteile eingebracht werden kann.

Gemäß einer Weiterbildung der vorliegenden Erfindung erhält man ein bevorzugtes besonders steifes weiteres Element, insbesondere Seitenelement, sowie ein steifes Innenteilelement dann, wenn sowohl an wenigstens einem Innenteilelement als auch an dem weiteren Element jeweils zwei orthogonal zur Mittelkonsolenlängsrichtung vorstehende Rippen mit Abstand voneinander ausgeformt sind, wobei sich einander zugeordnete Rippen des Innenteilelements und des weiteren Elements bei an dem Innenteilelement angebrachtem weiteren Element zu jeweils einer gemeinsamen Hohlraumbegrenzungswand ergänzen. Damit ist zum einen ein Hohlraum mit rechteckigem oder trapezförmigen Querschnitt realisierbar. Zum anderen ist durch die Vereinigung von je zwei Rippen auf Seiten des Innenteils und zwei Rippen auf Seiten des weiteren Elements, insbesondere des Seitenelements, eine sehr große Hohlraumquerschnittsfläche erzielbar ist, so dass auch große Kabelbäume darin aufgenommen oder große Luftmengen durch diesen geräuscharm hindurch bewegt werden können. Das oben zur stoßartigen Schweißverbindung von Rippen Gesagte gilt hier entsprechend.

Der bevorzugte, in Mittelkonsolenlängsrichtung verlaufende Hohlraum kann besonders einfach dadurch gebildet sein, dass eine den Hohlraum begrenzende Rippe zumindest abschnittsweise in Mittelkonsolenlängsrichtung verläuft und vorzugsweise den Hohlraum in Richtung orthogonal zur Mittelkonsolenlängsrichtung begrenzt.

Da das wenigstens eine Seitenelement in der Regel dazu vorgesehen ist, eine Dekorkaschierung zu erhalten und damit zur Bereitstellung einer Sichtfläche vorgesehen ist, ist es vorteilhaft, wenn das wenigstens eine Seitenelement eine in im Wesentlichen in Mittelkonsolenquerrichtung weisende Verkleidungsseite des ihm zugeordneten Innenteilelements verkleidet und wenigstens eine weitere an die Verkleidungsseite anschließende Seite des Innenteilelements zumindest teilweise abdeckt. Durch diese vorteilhafte Weiterbildung der vorliegenden Erfindung kann die Gestaltung des Innenteilelements im Wesentlichen losgelöst von ästhetischen Überlegungen und nahezu ausschließlich funktionsorientiert erfolgen, da das wenigstens eine Seitenelement das ihm zugeordnete Innenteilelement über die Verkleidungsseite hinaus abschnittsweise umgibt, so dass das Innenteilelement zum Großteil durch das Seitenelement verborgen und nicht einsehbar ist.

Bevorzugt ist dabei die wenigstens eine weitere an die Verkleidungsseite anschließende Seite eine Oberseite der Mittelkonsole, welche im am Fahrzeug montierten Zustand der Mittelkonsole zum Fahrzeughimmel weist. Es kann daran gedacht sein, dass das wenigstens eine Seitenelement zusätzlich oder alternativ hierzu auch eine zum Fahrzeugheck weisende Seite des Innenteilelements zumindest teilweise abdeckt, so dass von Fahrgästen auf der Rücksitzbank das Innenteilelement auch ohne weitere Anordnung von Blendenelementen kaum einsehbar ist. Nach unten schließt die im Fahrzeug montierte Mittelkonsole in der Regel an den Fahrzeugboden an, so dass hier eine Abdeckung der Innenteilelemente durch ein Seitenelement nicht unbedingt erforderlich ist.

Zur Vereinfachung der Montage der Mittelkonsole können an dem wenigstens einen Seitenelement Anbringungsausbildungen zur Anbringung von Funktionselementen oder/und Blendenelementen ausgebildet sein. Derartige Funktionselemente können beispielsweise wenigstens ein Becherhalter, Münzhalter, eine Telefonablage, ein Staufach oder ähnliches sein. An Stellen, für die keine Funktionselemente vorgesehen sind, etwa weil sie dort nicht sinnvoll anbringbar sind oder weil ein Kunde ein Fahrzeug mit geringerer Funktionsausstattung gewählt hat, können an den Anbringungsausbildungen einfache Blendenelemente angebracht werden. Mit dem Vorsehen von Anbringungsausbildungen an dem wenigstens einen Seitenelement können mit demselben Innenteil ohne dessen Veränderung zahlreiche Gestaltungsvarianten der Mittelkonsole gebildet werden.

Wenn das Seitenelement wie oben beschrieben, das Innenteilelement zumindest ein Stück weit umgibt, kann das Funktionselement oder/und das Blendenelement unmittelbar an das Seitenteil anschließen und somit das Innenteilelement beziehungsweise das aus Innenteilelementen gebildete Innenteil vollständig abgedeckt werden.

Das wenigstens eine Seitenelement kann, wie oben bereits geschildert, mit Verstärkungsrippen ausgebildet sein, wobei zusätzlich zu den einen Hohlraum begrenzenden Rippen weitere Verstärkungsrippen vorgesehen sein können, so dass das Seitenelement in zunehmendem Maße tragende Funktionen übernehmen und erheblich zur Gesamtsteifigkeit beitragen kann.

Die erfindungsgemäße Mittelkonsole wurde bisher mit wenigstens einem Seitenteilelement beschrieben, da in besonderen Fahrzeuganwendungen theoretisch daran gedacht sein kann, eine Konsolenseite unverkleidet zu lassen. Weiterhin kann daran gedacht sein, mehr als ein Seitenelement an einem Innenteilelement anzubringen, etwa um aus Sicherheitsgründen an den Innenteilelementen etwaig vorgesehene Sollbruchstellen zu unterstützen. In den meisten Fällen wird jedoch jedem Innenteilelement genau ein Seitenelement zugeordnet und an diesem anbringbar oder angebracht sein. Eine Mittelkonsole mit zwei Innenteilelementen und zwei Seitenelementen bildet somit die kleinste Anzahl an Bauteilen und erfordert den geringsten Montageaufwand zur Bildung eines hochsteifen und zur Fahrer- wie zur Beifahrerseite verkleideten Mittelkonsolenbasisteils. Vorteilhafterweise können dann beide Seitenelemente zumindest eines der oben bezüglich des wenigstens einen Seitenelements genannten Weiterbildungsmerkmale aufweisen. In diesem Falle können beispielsweise Funktionselemente oder/und Blendenelemente an den beiden Seitenelementen derart angeordnet sein, dass sie einen in Mittelkonsolenquerrichtung verlaufenden Spalt zwischen diesen überbrücken und die Seitenelemente miteinander verbinden. Dadurch wird eine insgesamt sehr steife Mittelkonsole erhalten, da zur Steifigkeit des durch die Innenteilelemente gebildeten Innenteils eine zusätzliche Steifigkeit von durch Funktions- oder/und Blendenelementen verbundenen Seitenelementen hinzutritt. Dies trifft insbesondere dann zu, wenn die Funktions- oder/und Blendenelemente mit den Seitenelementen verschweißt werden.

Zur gesonderten Versorgung des Fahrer- und des Beifahrerraums mit klimatisierter Luft kann zwischen je einem Seitenelement und einem Innenteilelement jeweils ein im Wesentlichen in Mittelkonsolenlängsrichtung verlaufender Hohlraum gebildet sein.

Das oben in Bezug auf die Gleichartigkeit, Ähnlichkeit und Symmetrie der Innenteilelemente Gesagte gilt für die an unterschiedlichen Seiten der Mittelkonsole anbringbaren Seitenelemente entsprechend. So weisen vorteilhaft auch die Seitenelemente im Wesentlichen die gleiche Masse auf oder/und sind abschnittsweise symmetrisch zueinander.

Eine weitere Erhöhung der Steifigkeit der Mittelkonsole kann dadurch erfolgen, dass an wenigstens einem von zwei unterschiedlichen Mittelkonsolenseiten zugeordneten Seitenelementen, vorzugsweise an beiden Seitenelementen, je wenigstens ein Vorsprung zur Verbindung mit dem jeweils anderen Seitenelement ausgebildet ist. Grundsätzlich kann daran gedacht sein, einen Vorsprung an einer beliebigen Stelle des wenigstens einen Seitenelements vorzusehen. Bevorzugt ist jedoch der wenigstens eine Vorsprung an einem Längsende eines Seitenelements ausgebildet, da dadurch einerseits die Verwindungssteifigkeit der Mittelkonsole erhöht werden kann, und außerdem der Vorsprung zur Anbringung eines endseitigen Funktions- oder/und Blendenelements nutzbar ist.

Gemäß einem zweiten Gesichtspunkt der vorliegenden Erfindung wird die eingangs genannte Aufgabe auch gelöst durch ein Verfahren zur Herstellung einer Mittelkonsole für ein Kraftfahrzeug, umfassend die folgenden Schritte:
- Verbinden von zwei im Wesentlichen in Mittelkonsolenlängsrichtung verlaufenden Innenteilelementen miteinander längs einer im Wesentlichen in Längsrichtung der Innenteilelemente verlaufenden Verbindungsfläche,
- Verbinden wenigstens eines Seitenelements mit einem Innenteilelement.

Die mit dem genannten Verfahren erzielbaren Vorteile entsprechen den oben im Zusammenhang mit der erfindungsgemäßen Mittelkonsole geschilderten Vorteilen, so dass an dieser Stelle ausdrücklich auf das im Zusammenhang mit der Mittelkonsole Gesagte verwiesen wird.

Bei dem erfindungsgemäßen Verfahren wird aus den oben bereits genannten Gründen vorteilhaft mit jedem Innenteilelement je wenigstens ein Seitenelement verbunden.

Darüber hinaus kann das Verfahren weiter den Schritt eines Verbindens von Funktionselementen oder/und Blendenelementen mit einer Baugruppe aus zwei miteinander verbundenen Innenteilelementen und wenigstens einem mit einem Innenteilelement verbundenen Seitenelement umfassen.

Die vorliegende Erfindung wird im folgenden anhand der beiliegenden Figuren näher erläutert. Es stellt dar:
- Figur 1: eine Explosionszeichnung einer Ausführungsform einer erfindungsgemäßen Mittelkonsole;

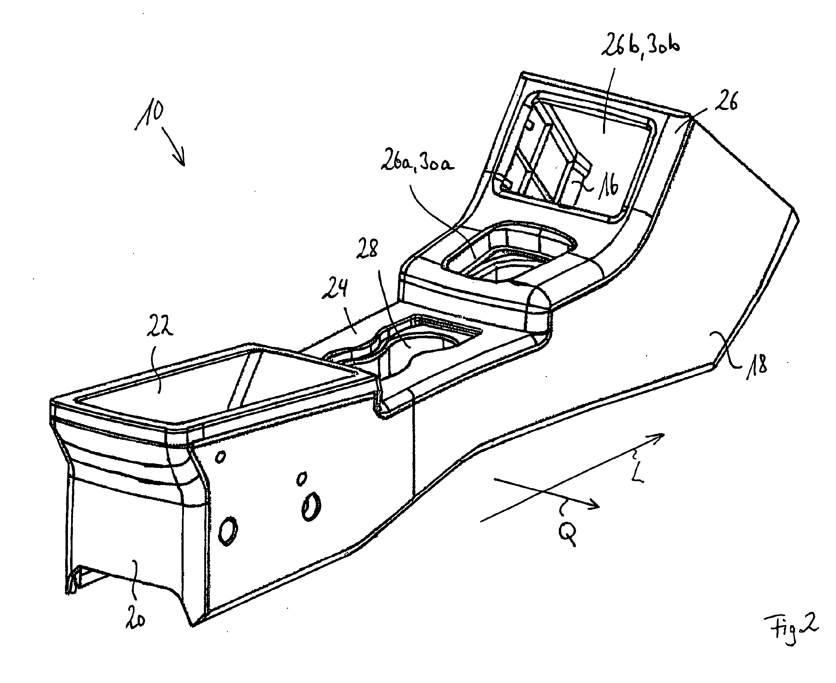

- Figur 2: eine perspektivische Ansicht einer erfindungsgemäßen Mittelkonsole im zusammengebauten Zustand;
- Figur 3: einen Querschnitt durch die zusammengebaute Mittelkonsole der Figur 2, sowie

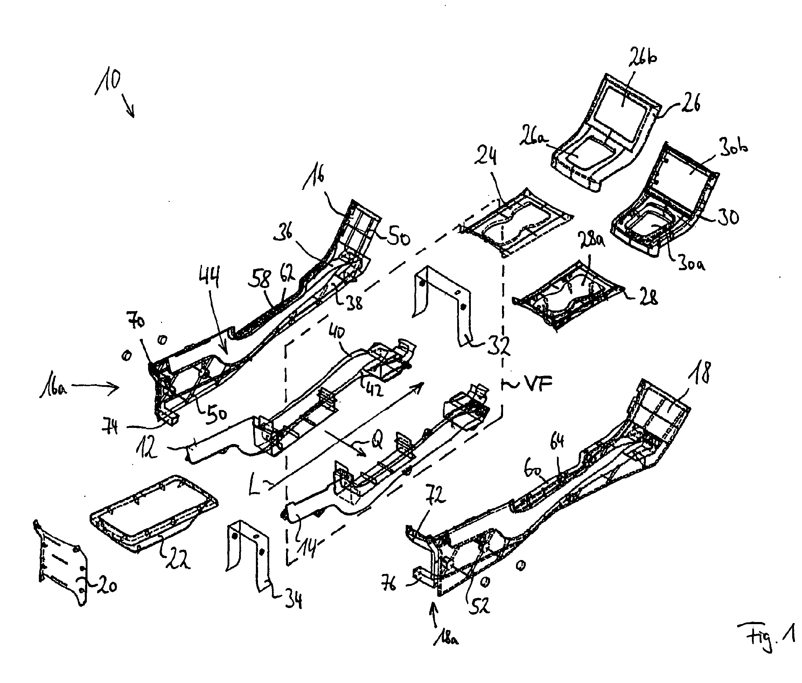

In der Figur 1 ist eine erfindungsgemäße Mittelkonsole allgemein mit 10 bezeichnet. Diese Mittelkonsole 10 umfasst ein linkes Innenteilelement 12 sowie ein rechtes Innenteilelement 14. Die Innenteilelemente 12 und 14 erstrecken sich hauptsächlich im Wesentlichen in Mittelkonsolenlängsrichtung L. Die Innenteilelemente 12, 14 dieser Ausführungsfrom sind längs einer ebenen in Mittelkonsolenlängsrichtung L und orthogonal zur Mittelkonsolenquerrichtung verlaufenden imaginären Verbindungsfläche VF miteinander verbindbar.

An diesen Innenteilelementen 12 und 14 ist ein linkes Seitenelement 16 und ein rechtes Seitenelement 18 anbringbar. Genauer ist das linke Seitenelement 16 dem linken Innenteilelement 12 zugeordnet, während das rechte Seitenelement 18 dem rechten Innenteilelement 14 zugeordnet ist. Im verbundenen Zustand bilden die Innenteilelemente 12 und 14 und die Seitenelemente 16 und 18 ein Mittelkonsolenbasisteil.

Weiterhin umfasst die Mittelkonsole 10 ein hinteres Blendenelement 20, ein Staufach 22, ein mittleres Blendenelement 24 sowie ein vorderes Blendenelement 26.

Die Blendenelemente 20, 24 und 26 überspannen die Mittelkonsole in Mittelkonsolenquerrichtung Q. Die Seitenelemente 16 und 18 sind im montierten Zustand durch die Innenteilelemente 12 und 14 miteinander verbunden.

Das mittlere und das vordere Blendenelement 24 beziehungsweise 26 sind nicht unmittelbar an den Seitenelementen 16 und 18 angebracht. Vielmehr ist das mittlere Blendenelement 24 auf einem Becherhalter 28 zu dessen Verkleidung vorgesehen. Ebenso ist das vordere Blendenelement 26 auf einem Blendenträger 30 angeordnet, welcher wiederum mit den Seitenelementen 16 und 18 verbunden ist.

Das Trägerelement 30 und das vordere Blendenelement 26 weisen eine Ganghebelausnehmung 26a beziehungsweise 30a sowie eine Anzeigeausnehmung 26b beziehungsweise 30b auf.

Die erstgenannten Ganghebelausnehmungen 26a beziehungsweise 30a werden im fertig montierten Fahrzeug von einem Ganghebel oder Automatikwahlhebel durchsetzt. In den Anzeigeausnehmungen 26b beziehungsweise 30b kann eine Anzeige etwa eines Navigationssystems oder eine Multifunktionsanzeige für Radio, Klimaanlage, usw. angeordnet sein.

In Figur 1 sind zusätzlich noch ein vorderer Konsolenhalter 32 sowie ein hinterer Konsolenhalter 34 gezeigt, mit welchen die Mittelkonsole 10 an einem nicht dargestellten Fahrzeugboden eines Kraftfahrzeugs befestigbar ist.

Die Seitenteile 16 und 18 weisen eine im Wesentlichen zueinander spiegelbildliche Ausgestaltung aus. Sie besitzen daher nahezu die gleiche Masse. Beispielhaft für beide Seitenelemente 16 und 18 wird im folgenden das linke Seitenelement 16 näher erläutert.

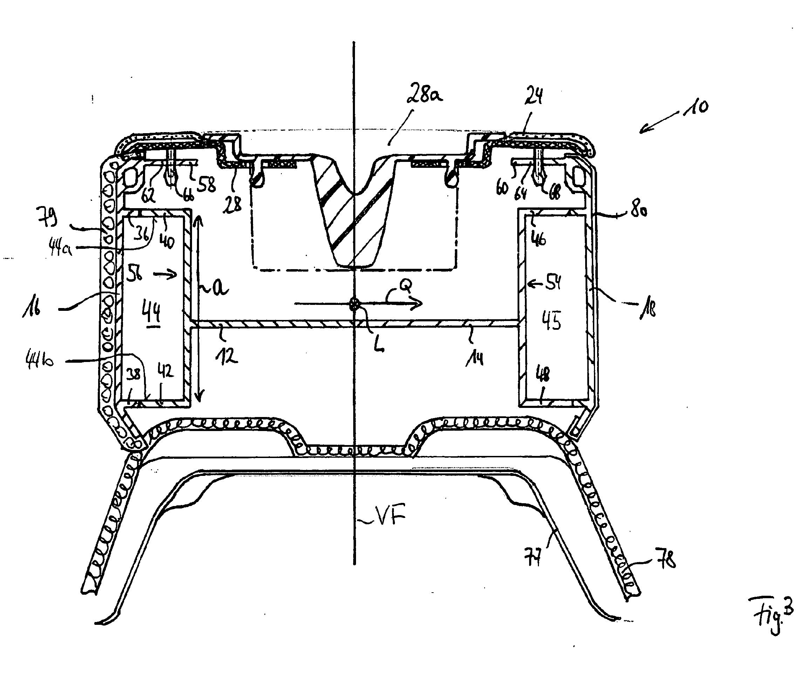

Das linke Seitenelement 16 und 18 weist zwei im Wesentlichen in Konsolenlängsrichtung L verlaufende und orthogonal zur Konsolenlängsrichtung L mit Abstand voneinander angeordnete Rippen 36 und 38 auf, welche bei Vereinigung mit Rippen 40 und 42 am linken Innenteilelement 12 einen Hohlraum 44 (siehe Figur 3) begrenzen. In gleicher Weise begrenzen das rechte Innenteilelement 14 und das rechte Seitenelement 18 einen Hohlraum 45.

Den im Wesentlichen ebenfalls in Konsolenlängsrichtung L verlaufenden Rippen 40 und 42 des Innenteilelements 12 entsprechen die Rippen 44 und 46 des zum linken Innenteilelements 12 im Wesentlichen spiegelbildlich ausgestalteten rechten Innenteilelements 14.

Sowohl das linke Seitenelement 16 als auch das linke Innenteilelement 12 werden jeweils durch die den Hohlraum 44 begrenzenden Rippen 36 und 38 beziehungsweise 40 und 42 versteift. Zusätzlich sind am linken Seitenelement 16 Versteifungsrippen 50 gitterartig zur Versteifung des linken Seitenelements 16 ausgeformt. Ebenso sind zusätzliche Versteifungsrippen 52 am rechten Seitenelement 18 angedeutet.

Das rechte Seitenelement 18 dient zunächst dazu, eine zur Konsolenquerrichtung Q im Wesentlichen orthogonale Verkleidungseite 54 des rechten Innenteilelements 14 abzudecken. Ebenso dient das linke Seitenelement 16 dazu, eine zur Konsolenquerrichtung Q im Wesentlichen orthogonale Verkleidungsseite 56 des linken Innenteilelements zu verkleiden.

Darüber hinaus weisen das linke und das rechte Seitenteil 16 beziehungsweise 18 eine an ihrem oberen Rand verlaufende Rippe 58 beziehungsweise 60 auf (siehe auch Figur 3), welche im montierten Zustand der Mittelkonsole 10 eine an die Verkleidungsseite 56 beziehungsweise 54 anschließende Oberseite der Basiselemente 12 beziehungsweise 14 zumindest teilweise abdecken. An diesen, die Seitenelemente 16, 18 zusätzlich versteifenden Rippen 58 beziehungsweise 60 sind Anbringungsausnehmungen ausgebildet, von welchen beispielhaft am linken Seitenelement 16 die Anbringungsausnehmung 62 und am rechten Seitenelement 18 die Anbringungsausnehmung 64 mit Bezugszeichen versehen sind. Diese Anbringungsausnehmungen 62 und 64 werden, wie in Figur 3 dargestellt ist, im montierten Zustand von Klipsen 66 beziehungsweise 68 durchsetzt, welche am Becherhalter 28 angeformt sind. Mit dieser Verklipsung können die Funktionselemente 22, 28 und 30 sehr einfach an den Seitenelementen 16 und 18 angebracht werden. Es ist jedoch auch eine andere Art der Verbindung denkbar, etwa Kleben, Verschrauben, Vernieten, Verschweißen und dergleichen.

An ihrem einen Längsende 16a beziehungsweise 18a weisen die Seitenelemente 16 und 18 je einen oberen Vorsprung 70 beziehungsweise 72 sowie je einen unteren Vorsprung 74 beziehungsweise 76 auf. Die oberen Vorsprünge 70 und 72 sowie die unteren Vorsprünge 74 und 76 werden an ihren freien Längsenden miteinander verbunden, was die Verwindungssteifigkeit der Mittelkonsole 10 erhöht und was überdies die Anbringung des hinteren Blendenelements 20 an den Seitenelementen 16 und 18 vereinfacht.

In Figur 3 ist zu erkennen, dass die Rippen 36 und 38 des linken Seitenelements 16 sowie die Rippen 40 und 42 des linken Innenteilelements 12, welche stoßweise, genauer im Stumpfstoß, paarweise miteinander durch Verschweißen verbunden sind, mit einem Abstand a orthogonal zur Konsolenlängsrichtung L und orthogonal zur Konsolenquerrichtung Q von einander angeordnet sind. Die verbundenen Rippen 36 und 40 bilden eine obere Hohlraumbegrenzungswand 44a, die verbundenen Rippen 38 und 42 bilden eine untere Hohlraumbegrenzungswand 44b. In Figur 3 ist ein Fahrzeugbodenblech mit 77 und eine darüber liegende Fahrzeugbodenverkleidung mit 78 bezeichnet.

In Figur 3 ist weiter angedeutet, dass ein und dieselben Seitenteile zur Anbringung unterschiedlicher Kaschierungen ausgebildet sein können. Beispielsweise ist das linke Seitenelement 16 mit einem Teppich 79 kaschiert, während das rechte Seitenelement 18 mit einer zum Vergleich mit dem Teppich 79 dünneren Folie 80 kaschiert ist.

Wie im Querschnitt von Figur 3 gezeigt ist, erhält die Mittelkonsole 10 ihre besonders hohe Steifigkeit zum einen durch die Verbindung der Seitenteile 16 und 18 mit den Innenteilelementen 12 und 14 und deren Verbindung untereinander sowie durch die zusätzliche Anbringung von Funktionselementen, wie dem Becherhalter 28, welcher die Seitenteile 16 und 18 zusätzlich miteinander verbindet.

## Patentansprüche

1. Mittelkonsole (10) für ein Kraftfahrzeug, welche ein im Wesentlichen in Mittelkonsolenlängsrichtung (L) verlaufendes Innenteil (12, 14) und wenigstens ein Seitenelement (16, 18) umfasst, das am Innenteil (12, 14) angebracht oder anbringbar ist und das im am Innenteil (12, 14) zur Bildung eines Mittelkonsolenbasisteils (12, 14, 16, 18) angebrachten Zustand im Wesentlichen in Mittelkonsolenlängsrichtung (L) verläuft,
**dadurch gekennzeichnet, dass** das Innenteil (12, 14) zwei sich im Wesentlichen in Mittelkonsolenlängsrichtung erstreckende und miteinander längs einer Verbindungsfläche (VF) verbundene Innenteilelemente (12, 14) umfasst, wobei die Verbindungsfläche (VF) im Wesentlichen in Mittelkonsolenlängsrichtung (L) verläuft.

2. Mittelkonsole nach Anspruch 1,
**dadurch gekennzeichnet, dass** das Innenteil (12, 14) aus den beiden Innenteilelementen (12, 14) besteht.

3. Mittelkonsole nach Anspruch 1 oder 2,
**dadurch gekennzeichnet, dass** die Verbindungsfläche (VF) zumindest abschnittsweise im Wesentlichen orthogonal zur Mittelkonsolenquerrichtung (Q) verläuft.

4. Mittelkonsole nach einem der vorhergehenden Ansprüche,
**dadurch gekennzeichnet, dass** die zwei Innenteilelemente (12, 14) und das wenigstens eine Seitenelement (16, 18) derart ausgebildet sind, dass zwei unmittelbar miteinander verbundene von diesen Elementen wenigstens einen Hohlraum, insbesondere einen Luftkanal oder/und einen Kabelkanal, definieren.

5. Mittelkonsole nach Anspruch 4,
**dadurch gekennzeichnet, dass** an wenigstens einem der Elemente: Innenteilelement (12, 14) und einem weiteren Element (16, 18) aus Innenteilelement (12, 14) und Seitenelement (16, 18), vorzugsweise am Seitenelement (16, 18), wenigstens eine orthogonal zur Mittelkonsolenlängsrichtung vorstehende Rippe (36, 38, 40, 42) ausgeformt ist, welche den Hohlraum (44) zumindest abschnittsweise begrenzt.

6. Mittelkonsole nach Anspruch 5,
**dadurch gekennzeichnet, dass** sowohl an wenigstens einem Innenteilelement (12, 14) als auch an wenigstens einem weiteren Element (16, 18) aus Innenteilelement (12, 14) und Seitenelement (16, 18), vorzugsweise am Seitenelement (16, 18), jeweils wenigstens eine orthogonal zur Mittelkonsolenlängsrichtung (L) vorstehende Rippe (36, 38, 40, 42) ausgeformt ist, welche Rippen (36, 38, 40, 42) sich vorzugsweise bei an dem Innenteilelement (12, 14) angebrachtem weiteren Element zu einer gemeinsamen Hohlraumbegrenzungswand (44a, 44b) ergänzen.

7. Mittelkonsole nach Anspruch 6,
**dadurch gekennzeichnet, dass** sowohl an wenigstens einem Innenteilelement (12, 14) als auch an wenigstens einem weiteren Element (16, 18) aus Innenteilelement (12, 14) und Seitenelement (16, 18), vorzugsweise am Seitenelement (16, 18), jeweils zwei orthogonal zur Mittelkonsolenlängsrichtung (L) vorstehende Rippen (36, 38, 40, 42) mit Abstand (a) voneinander ausgeformt sind, wobei einander zugeordnete Rippen (36, 40 und 38, 42) des Innenteilelements (12, 14) und des weiteren Elements (16, 18) bei an dem Innenteilelement (12, 14) angebrachtem weiteren Element (16, 18) sich zu jeweils einer gemeinsamen Hohlraumbegrenzungswand (44a, 44b) ergänzen.

8. Mittelkonsole nach einem der vorhergehenden Ansprüche,
**dadurch gekennzeichnet, dass** an wenigstens einem der Elemente: Innenteilelement (12, 14) und Seitenelement (16, 18), vorzugsweise am Seitenelement (16, 18), Anbringungsausbildungen (60, 62) zur Anbringung von Funktionselementen (22, 28), wie etwa Becherhalter (28), Münzhalter, Telefonablage, Staufach (22), und dergleichen, oder/und Blendenelementen (20, 24, 26) ausgebildet sind.

9. Mittelkonsole nach einem der vorhergehenden Ansprüche,
**dadurch gekennzeichnet, dass** sie zwei Seitenelemente (16, 18) aufweist, von welchen jedes einem Innenteilelement (12, 14) zugeordnet und zur Bildung eines Mittelkonsolenbasisteils (12, 14, 16, 18) an diesem anbringbar oder angebracht ist.

10. Mittelkonsole nach Anspruch 9,
**dadurch gekennzeichnet, dass** an wenigstens einem Seitenelement (16, 18), vorzugsweise an beiden Seitenelementen (16, 18), wenigstens ein Vorsprung (70, 72, 74, 76) zur Verbindung mit dem jeweils anderen Seitenelement (16, 18) ausgebildet ist.

11. Mittelkonsole nach Anspruch 10,
**dadurch gekennzeichnet, dass** der wenigstens eine Vorsprung 70, 72, 74, 76) an einem Längsende eines Seitenelements (16, 18) ausgebildet ist.

12. Verfahren zur Herstellung einer Mittelkonsole (10) für ein Kraftfahrzeug, umfassend die folgenden Schritte:
- Verbinden von zwei im Wesentlichen in Mittelkonsolenlängsrichtung verlaufenden Innenteilelementen (12, 14) miteinander längs einer im Wesentlichen in Längsrichtung (L) der Innenteilelemente (12, 14) verlaufenden Verbindungsfläche (VF),
- Verbinden eines im Wesentlichen in Mittelkonsolenlängsrichtung verlaufenden Seitenelements (16, 18) mit einem Innenteilelement (12, 14).

13. Verfahren nach Anspruch 12,
**dadurch gekennzeichnet, dass** mit jedem Innenteilelement (12, 14) je ein Seitenelement (16, 18) verbunden wird.

14. Verfahren nach einem der Ansprüche 12 oder 13,
**dadurch gekennzeichnet, dass** es weiter den Schritt eines Verbindens von Funktionselementen (22, 28) oder/und Blendenelementen (20, 24, 26) mit einem Basisteil (12, 14, 16, 18) aus zwei miteinander verbundenen Innenteilelementen (12, 14) und wenigstens einem mit einem Innenteilelement (12, 14) verbundenen Seitenelement (16, 18) umfasst.

## Claims

1. Centre console (10) for a motor vehicle, comprising an inner part (12, 14) extending substantially in the longitudinal direction (L) of the centre console and at least one side element (16, 18) which is attached or may be attached to the inner part (12, 14) and which extends, in that state of attachment to the inner part (12, 14) for forming a centre console base part (12, 14, 16, 18), substantially in the longitudinal direction (L) of the centre console, **characterised in that** the inner part (12, 14) comprises two inner part elements (12, 14) which extend substantially in the longitudinal direction of the centre console and are interconnected along a connection face (VF), the connection face (VF) extending substantially in the longitudinal direction (L) of the centre console.

2. Centre console according to claim 1, **characterised in that** the inner part (12, 14) consists of the two inner part elements (12, 14).

3. Centre console according to either claim 1 or claim 2, **characterised in that** the connection face (VF) extends, at least in certain sections, substantially orthogonally to the transverse direction (Q) of the centre console.

4. Centre console according to any one of the preceding claims, **characterised in that** the two inner part elements (12, 14) and the at least one side element (16, 18) are configured in such a way that two of these elements, which two elements are directly interconnected, define at least one cavity, in particular an air channel and/or a cable channel.

5. Centre console according to claim 4, **characterised in that** at least one rib (36, 38, 40, 42), which protrudes orthogonally to the longitudinal direction of the centre console and delimits the cavity (44), a least in certain sections, is formed on at least one of the following elements: the inner part element (12, 14) and a further element (16, 18) consisting of the inner part element (12, 14) and side element (16, 18), preferably on the side element (16, 18).

6. Centre console according to claim 5, **characterised in that** at least one respective rib (36, 38, 40, 42), which ribs (36, 38, 40, 42) protrude orthogonally to the longitudinal direction (L) of the centre console and preferably complement one another, when the further element is attached to the inner part element (12, 14), to form a common cavity-delimiting wall (44a, 44b), is formed both on at least one inner part element (12, 14) and on at least one further element (16, 18) consisting of the inner part element (12, 14) and side element (16, 18), preferably on the side element (16, 18).

7. Centre console according to claim 6, **characterised in that** two respective ribs (36, 38, 40, 42), protruding orthogonally to the longitudinal direction (L) of the centre console, are formed at a distance (a) from each other, both on at least one inner part element (12, 14) and on at least one further element (16, 18) consisting of the inner part element (12, 14) and side element (16, 18), preferably on the side element (16, 18), mutually associated ribs (36, 40 and 38, 42) of the inner part element (12, 14) and the further element (16, 18) complementing one another, when the further element (16, 18) is attached to the inner part element (12, 14), to form a respective common cavity-delimiting wall (44a, 44b).

8. Centre console according to at least one of the preceding claims, **characterised in that** attachment formations (60, 62) for the attachment of functional elements (22, 28), for example a cup holder (28), coin holder, telephone cradle, storage compartment (22) and the like, and/or screen elements (20, 24, 26) are formed on at least one of the following elements: inner part element (12, 14) and side element (16, 18), preferably on the side element (16, 18).

9. Centre console according to at least one of the preceding claims, **characterised in that** it has two side elements (16, 18), each of which is associated with an inner part element (12, 14) and may be attached or is attached to said inner part element for forming a centre console base part (12, 14, 16, 18).

10. Centre console according to claim 9, **characterised in that** at least one projection (70, 72, 74, 76) is configured on at least one side element (16, 18), preferably on both side elements (16, 18), for connecting to the respective other side element (16, 18).

11. Centre console according to claim 10, **characterised in that** at least one projection (70, 72, 74, 76) is configured at a longitudinal end of a side element (16, 18).

12. Method for producing a centre console (10) for a motor vehicle, including the following steps:
- interconnecting of two inner part elements (12, 14) extending substantially in the longitudinal direction of the centre console, along a connection face (VF) extending substantially in the longitudinal direction (L) of the inner part elements (12, 14),
- connecting of a side element (16, 18), extending substantially in the longitudinal direction of the centre console, to an inner part element (12, 14).

13. Method according to claim 12, **characterised in that** a respective side element (16, 18) is connected to each inner part element (12, 14).

14. Method according to either claim 12 or claim 13, **characterised in that** it further includes the step of connecting functional elements (22, 28) and/or screen elements (20, 24, 26) to a base part (12, 14, 16, 18) consisting of two interconnected inner part elements (12, 14) and at least one side element (16, 18) connected to an inner part element (12, 14).

## Revendications

1. Console centrale (10) pour un véhicule automobile, qui comprend une partie intérieure (12, 14) agencée principalement dans le sens longitudinal de la console centrale (L) et au moins un élément latéral (16, 18), lequel est placé ou peut être placé sur la partie intérieure (12, 14) et qui est agencé principalement dans le sens longitudinal de la console centrale (L) lorsqu'il est placé sur la partie intérieure (12, 14) pour former une partie de base de console centrale (12, 14, 16, 18),
**caractérisée en ce que** la partie intérieure (12, 14) comprend deux éléments de partie intérieure (12, 14) s'étendant essentiellement dans le sens longitudinal de la console centrale et reliés entre eux le long d'une surface de liaison (VF), la surface de liaison (VF) étant agencée essentiellement dans le sens longitudinal de la console centrale (L).

2. Console centrale selon la revendication 1,
**caractérisée en ce que** la partie intérieure (12, 14) est constituée des deux éléments de partie intérieure (12, 14).

3. Console centrale selon la revendication 1 ou 2,
**caractérisée en ce que** la surface de liaison (VF) est agencée au moins par endroits essentiellement à angle droit par rapport au sens transversal de la console centrale (Q).

4. Console centrale selon l'une quelconque des revendications précédentes,
**caractérisée en ce que** les deux éléments de partie intérieure (12, 14) et le au moins un élément latéral (16, 18) sont conçus de telle sorte que deux de ces éléments, reliés directement entre eux, définissent au moins une cavité, en particulier un canal d'air et/ou un faisceau de câbles.

5. Console centrale selon la revendication 4,
**caractérisée en ce qu'**au moins une nervure (36, 38, 40, 42) dépassant perpendiculairement au sens longitudinal de la console centrale, qui délimite la cavité (44) au moins par endroits, est formée sur au moins l'un des éléments suivants : élément de partie intérieure (12, 14) et un autre élément (16, 18) constitué de l'élément de partie intérieure (12, 14) et de l'élément latéral (16, 18), de préférence sur l'élément latéral (16, 18).

6. Console centrale selon la revendication 5,
**caractérisée en ce qu'**à chaque fois au moins une nervure (36, 38, 40, 42) débordant perpendiculairement au sens longitudinal de la console centrale (L), lesquelles nervures (36, 38, 40, 42) se complètent de préférence avec un autre élément placé sur l'élément de partie intérieure (12, 14) pour former une paroi de délimitation de cavité (44a, 44ab) commune, est formée aussi bien sur au moins un élément de partie intérieure (12, 14) que sur au moins un autre élément (16, 18) comprenant l'élément de partie intérieure (12, 14) et l'élément latéral (16, 18), de préférence sur l'élément latéral (16, 18).

7. Console centrale selon la revendication 6,
**caractérisée en ce qu'**à chaque fois deux nervures (36, 38, 40, 42) débordant perpendiculairement au sens longitudinal de la console centrale (L) sont formées à distance (a) l'une de l'autre aussi bien sur un élément de partie intérieure (12, 14) que sur au moins un autre élément (16, 18) comprenant l'élément de partie intérieure (12, 14) et l'élément latéral (16, 18), de préférence sur l'élément latéral (16, 18), des nervures (36, 28, 40, 42), attribuées les unes aux autres, de l'élément de partie intérieure (12, 14) et de l'autre élément (16, 18) se complétant avec l'autre élément (16, 18) placé sur l'élément de partie intérieure (12, 14) pour former respectivement une paroi de délimitation de cavité (44a, 44b) commune.

8. Console centrale selon l'une quelconque des revendications précédentes,
**caractérisée en ce que** sur au moins l'un des éléments suivants : l'élément de partie intérieure (12, 14) et l'élément latéral (16, 18), de préférence sur l'élément latéral (16, 18), sont réalisés des dispositifs de placement (60, 62) pour le placement d'éléments fonctionnels (22, 28), comme par exemple un porte-gobelet (28), un support de monnaie, un support de téléphone, un compartiment de rangement (22), et similaires et/ou des éléments caches (20, 24, 26).

9. Console centrale selon l'une quelconque des revendications précédentes,
**caractérisée en ce qu'**elle présente deux éléments latéraux (16, 18), dont chacun est attribué à un élément de partie intérieure (12, 14) et placé ou peut être placé, pour former une partie de base de console centrale (12, 14, 16, 18) sur celle-ci.

10. Console centrale selon la revendication 9,
**caractérisée en ce que** sur au moins un élément latéral (16, 18), de préférence sur les deux éléments latéraux (16, 18), il est prévu au moins une partie saillante (70, 72, 74, 76) pour la liaison avec l'autre élément latéral (16, 18) respectif.

11. Console centrale selon la revendication 10,
**caractérisée en ce que** la au moins une partie saillante (70, 72, 74, 76) est conçue sur une extrémité longitudinale d'un élément latéral (16, 18).

12. Procédé pour la fabrication d'une console centrale (10) pour un véhicule automobile, comprenant les étapes suivantes :
- jonction de deux éléments de partie intérieure (12, 14) agencés sensiblement dans le sens longitudinal de la console centrale entre eux le long d'une surface de jonction (VF) agencée sensiblement dans le sens longitudinal (L) des éléments de partie intérieure (12, 14),
- jonction d'un élément latéral (16, 18) agencé sensiblement dans le sens longitudinal de la console centrale avec un élément de partie intérieure (12, 14).

13. Procédé selon la revendication 12,
**caractérisé en ce que** chaque élément latéral (16, 18) est relié à chaque élément de partie intérieure (12, 14).

14. Procédé selon l'une quelconque des revendications 12 ou 13,
**caractérisé en ce qu'**il comprend également l'étape d'une jonction d'éléments fonctionnels (22, 28) et/ou d'éléments caches (20, 24, 26) avec une partie de base (12, 14, 16, 18) comprenant des éléments de partie intérieure (12, 14) reliés entre eux et au moins un élément latéral (16, 18) relié à un élément de partie intérieure (12, 14).
